# EUROPÄISCHE PATENTSCHRIFT

(11) **EP 0 829 572 B1**
(45) Veröffentlichungstag und Bekanntmachung des Hinweises auf die Patenterteilung: **19.05.2004**
(21) Anmeldenummer: 97111796.5
(22) Anmeldetag: 11.07.1997
(51) Int. Cl.: D21F 1/08, D21F 1/02, D21F 1/00

(54) **Stoffdichtegeregelter Stoffauflauf mit Papierstoffkonsistenzregelung**
Consistency regulated Head-Box with a paper pulp consistency regulator
Caisse de tête à régulation de consistance incluant un régulateur de consistance de pulpe de papier

(30) Priorität: 30.08.1996 DE 19634996
(43) Veröffentlichungstag der Anmeldung: 18.03.1998
(73) Patentinhaber: Voith Paper Patent GmbH, 89522 Heidenheim (DE)
(72) Erfinder: Begemann, Ulrich, 89522 Heidenheim (DE); Münch, Rudolf, 89551 Königsbronn/Zang (DE)

(56) Entgegenhaltungen:
- EP-A- 0 635 600
- WO-A-89/11561
- DE-A- 4 239 845
- GB-A- 2 025 088

## Beschreibung

Die Erfindung betrifft einen stoffdichtegeregelten Stoffauflauf für eine Papiermaschine gemäß dem Oberbegriff des Anspruches 1, sowie eine Regeleinrichtung für einen derartigen Stoffauflauf gemäß dem Oberbegriff des Anspruches 10 und ein Regelverfahren gemäß dem Oberbegriff des Anspruches 15.

Aus der DE 43 16 054 ist ein stoffdichtegeregelter, zumindest teilweise sektional ausgebildeter Stoffauflauf für Papiermaschinen bekannt geworden, bei dem die Möglichkeit einer sektionalen Beeinflussung der zugeführten Stoffsuspension besteht. In derartigen Stoffaufläufen kann einen Flächengewichtsquerprofileinstellung unter anderem dadurch erfolgen, daß eine sektionale Beeinflussung der Stoffdichte vorgenommen wird, während Faserorientierungs-Querprofileinstellungen über die sektionale Beeinflussung der Volumenströme erfolgt. Die Regelung der Zudosierung von Verdünnungsflüssigkeit wird dabei in der Regel von einer Steuereinrichtung vorgenommen. Dabei wird das Flächengewichtsquer-Istprofil außerhalb des Stoffauflaufes beispielsweise im Siebbereich in gewissen Zeitabständen ΔT aufgenommen, und mit einem in einer Steuereinrichtung abgelegten Sollprofil verglichen. Bei Abweichungen von Ist- und Sollprofil wird durch entsprechende Betätigung der Stellglieder in den einzelnen Sektionen des Stoffauflaufes die Stoffdichte auf den gewünschten Wert eingestellt. Stoffaufläufe, die mit einer derartigen Querprofilregelung arbeiten, sind beispielsweise in der DE 42 39 845 offenbart.

Weiterhin offenbart das Dokument GB-A-2 025 088 eine Vorrichtung zur Regelung der Parameter (Prozeßgrößen) eines Stoffauflaufs einer Papiermaschine mit Meßfühlern zur direkten Messung der Prozeßparameter (z.B. Konsistenz, Stand des Papierstoffes im Stoffauflauf, Gesamtdruck im Auflaufkasten, Öffnung des Auslaufschlitzes) und Stellgliedern (z.B. Ventil für die Stoffzuführung, Stoffpumpe, Ventil für die Druckluft, Lippenöffnung des Stoffaustrittes).
Die Messung des Prozeßparameters "Konsistenz" erfolgt dabei lediglich mit einem Papierstoffkonsistenzsensor, welcher mit einer multivariablen und zentralen Steuereinrichtung verbunden ist. Der eine Papierstoffkonsistenzsensor ist dabei im maschinenbreiten Strömungskanal des Stoffauflaufes angebracht.

Das Dokument EP-A-0 635 600 offenbart ferner einen stoffdichtegeregelten Stoffauflauf für eine Papiermaschine mit einer gemeinsamen Zufuhrleitung für die Papierstoffsuspension, mit einem Turbulenzgenerator mit einer Vielzahl von Sektionen, in die die gemeinsame Zufuhrleitung sich verzweigt, und mit Mitteln zur Beeinflussung der Zusammensetzung der Stoffsuspensionsströme in den einzelnen der Vielzahl von Sektionen. Die genannten Mittel sind dabei offenbarungsgemäß Zusatzstromleitungen, die mit Hilfe eines Stellglieds in Richtung auf die Rohre des Turbulenzgenerators und davon weg verschiebbar sind.
Das Dokument offenbart überdies noch ein Verfahren zur Regelung des Flächengewichtsprofils einer Papierstoffbahn unter Verwendung des beschriebenen Stoffauflaufs.

Allerdings sind die mit einer derartigen Flächengewichtsquerprofilregelung gemäß der DE 42 39 845 erzielbaren Querprofilgüten insbesondere durch die bei bestimmten Anlagen auftretenden Längsschwankungen des Flächengewichtsprofils limitiert. Eine Hauptursache für die Längsschwankungen des Flächengewichts sind Konsistenzschwankungen im Stoffstrahl. Hauptursache für die Konsistenzschwankungen sind solche im Dickstoff und im Siebwasser, sowie eine ungleichmäßige Mischung von Dickstoff und Siebwasser. Desweiteren können Entmischungsvorgänge in den zuführenden Rohrleitungen aufgrund von Wandreibungen auftreten. Auch ist es möglich, daß Störungen im Regelkreis, beispielsweise eine Stellgliedhysterese, aber auch Meßrauschen und Reglerparametrierung zu schwankenden Dickstoffdosiermengen führen. Schließlich kann es zu Konsistenzschwankungen aufgrund von Einschwingvorgängen nach einem Sortenwechsel oder beim Anfahren der Anlage im Stoffauflauf kommen. Mit Hilfe der bislang verwendeten Verfahren zur Konsistenzregelung war es aufgrund der schlechten Qualität des Meßsignals für das Flächengewichtslängsprofil nicht möglich die Konsistenzschwankungen im Flächengewichtslängsprofil in ausreichendem Maß zu unterdrücken. Die unvermeidlichen Flächengewichtslängs- und Restabweichungen haben sich bei der Messung des Ist-Querprofiles in einer Art Prozessrauschen niedergeschlagen. Um dennoch ausreichend genaue Meßwerte für die Querprofilregelung erhalten zu können, wurde das Prozeßrauschen dadurch unterdrückt, daß die Meßwerte entsprechend stark gefiltert wurden. Aufgrund dieser Filterung erfolgte ein Regeleingriff der Querprofilregelung nur in großen Zeitabständen und/oder mit einer zu geringen Amplitude.

Das hatte zur Folge, daß das Einschwingverhalten der Regelung verlangsamt wurde und das mit Hilfe der Regelung einstellbare Querprofil durch den stochastischen Anteil im Querprofil aufgrund der verrauschten Profildaten limitiert war.

Aufgabe der Erfindung ist es somit, einen Stoffauflauf anzugeben, bei dem die Längsprofilstörungen verringert werden sowie eine Regeleinrichtung beziehungsweise ein Verfahren zur Regelung eines derartigen Stoffauflaufs, die eine bessere und schnellere Extraktion des Querprofils aus den verrauschten Profildaten und damit eine exaktere Regelung desselben als nach dem Stand der Technik erlaubt.

Diese Aufgabe wird gemäß der Erfindung durch einen Stoffauflauf nach Anspruch 1, sowie eine Regeleinrichtung nach Anspruch 10 und ein Regelungsverfahren nach Anspruch 15 gelöst. Die Papierstoffkonsistenzregelungen jeder einzelnen Sektion des Stoffauflaufes, ermöglichen es auf bessere Art und Weise als bislang die Längsprofilschwankungen, die von den Konsistenzschwankungen der zugeführten Papiersuspension herrühren schneller, als bislang möglich, auszugleichen. Dadurch weisen die mit Hilfe des Flächengewichtsquerprofilsensors hinter dem Stoffauflauf im Bereich der Papiermaschine aufgenommenen Flächengewichtsquerprofile ein weniger starkes Rauschen auf und können somit schneller ermittelt werden.
Damit kann eine Ausregelung bei eventuellen Querprofilabweichungen mit ausreichend hoher Geschwindigkeit erfolgen. Die Bestimmung der Papierstoffkonsistenz mittels eines Papierstoffkonsistenzsensors ist an verschiedenen Stellen des Stoffauflaufes möglich. In einer sehr kostengünstigen Ausführungsform kann vorgesehen sein, daß der Papierstoffkonsistenzsensor in der gemeinsamen Zufuhrleitung für die Papierstoffsuspension angeordnet ist oder aber auch am Rücklauf. In einer besonders bevorzugten Ausführungsform wird jeder der Sektionen ein eigener Papierstoffkonsistenzsensor zugeordnet, wodurch eine genaue Ausregelung von Längsprofilschwankungen einer jeden Sektion der Papierbahn ermöglicht wird und nicht nur eine Konsistenzregelung bezüglich der mittleren Zusammensetzung beispielsweise im gemeinsamen Zufuhr- beziehungsweise Verteilerrohr.

Für die Papierstoffkonsistenzsensoren ist es bei der vorliegenden Erfindung möglich, Meßprinzipien einzusetzen, bei denen nicht der Absolutwert der Konsistenz exakt erfaßt wird, sondern lediglich Abweichungen beziehungsweise Schwankungen der Konsistenz von beziehungsweise um einen vorgegebenen Mittelwert. Diese Abweichungen beziehungsweise Schwankungen müssen jedoch mit einer sehr hohen Auflösung ermittelt werden. Daher ist in einer ersten Ausführungsform vorgesehen, daß der Papierstoffkonsistenzsensor als Meßsignal ein Lichtsignal verwendet. Auf Basis dieses Meßprinzips ist es denkbar, die Papierstoffkonsistenz mit Hilfe von Lichtstreuung, Lichtreflexion oder aber mit Hilfe eines Partikelzählers zu ermitteln. Bei letzerer, bevorzugter Ausführungsform umfaßt der Papierstoffkonsistenzsensor einen Laser zur Lichterzeugung und eine Fotodiode zur Erfassung des Lichtsignals. Die Anzahl der Partikel pro Sekunde, die die Sektion des Stoffauflaufes, in der der Papierstoffkonsistenzsensor angeordnet ist passieren, können mit Hilfe einer derartigen Anordnung pro Zeiteinheit gezählt werden. Hieraus kann dann die Abweichung gegenüber einem vorgegebenen Mittelwert bestimmt werden. Es ist aber keinesfalls notwendig, die genaue Anzahl der Partikel zu ermitteln. Da lediglich die Schwankungen der Konsistenz erfaßt werden müssen, ist es in einer vereinfachten Ausführungsform ausreichend, nicht die genaue Anzahl der Partikel zu ermitteln sondern noch indirektere Maße hierfür zu verwenden, beispielsweise die Anzahl der Helldunkel-Übergänge pro Sekunde an der Fotodiode oder deren "Flackerintensität". Anstelle der Verwendung eines Lichtsignals als Meßsignal ist es auch möglich in einer Weiterbildung der Erfindung ein Papierstoffkonsistenzsensor auf der Basis von anderen Meßprinzipien, wie z. B. Mikrowellensignalen aufzubauen.

Neben einem verbesserten Stoffauflauf stellt die Erfindung auch eine Regeleinrichtung für einen derartigen stoffdichtegeregelten, insbesondere sektionalen Stoffauflaufes zur Verfügung, die zusätzlich zur Regeleinrichtung für das Längsgewichts-Querprofil eine Regeleinrichtung für die Papierstoffkonsistenz umfaßt, die der Flächengewichtsquerprofilregelung unterlagert ist. Das bedeutet, daß die Papierstoffkonsistenzregelung der Flächengewichtsquerprofilregelung nachgeordnet ist und üblicherweise mit einer wesentlich höheren Regelgeschwindigkeit arbeitet, da die Papierstoffkonsistenz im Vergleich zum Flächengewichtsquerprofil eine sich schnell verändernde Größe ist.

In einer Weiterbildung der Erfindung ist vorgesehen, daß der Sollwert für die Papierstoffkonsistenz-Regelvorrichtung, bezüglich dessen die Schwankungen bestimmt und damit die Regelung ausgelöst wird in einer Steuereinrichtung aus den Flächengewichtsquerprofil-Istwerten, die mit Hilfe des Flächengewichtsquerprofilsensors außerhalb des Stoffauflaufes bestimmt wurden, ermittelt wird.

Wie bereits zuvor ausgeführt, kann in einer vorteilhaften Weiterbildung der Erfindung vorgesehen sein, daß nicht die Absolutwerte der Papierstoffkonsistenz der Papierstoffkonsistenzregelung zugrunde gelegt werden, sondern lediglich Differenzsignale die bei Abweichungen der Papierstoffkonsistenz von einem vorgegebenen Sollwert erzeugt und der Regelung zugrunde gelegt werden.

Da die Papierstoffkonsistenz die sich schnell verändernde Regelgröße darstellt, ist es besonders vorteilhaft, wenn diese Größe mit einer höheren Abtastrate eingelesen wird als das Flächengewichtsquerprofil.

Neben der zuvor beschriebenen Regeleinrichtung stellt die Erfindung desweiteren noch ein Regelverfahren gemäß Anspruch 15 zur Verfügung, das in den auf Anspruch 15 rückbezogenen Unteransprüchen weitergebildet ist.

Die Erfindung soll nunmehr anhand der Zeichnungen und eines Ausführungsbeispieles näher beschrieben werden.

Es zeigen:

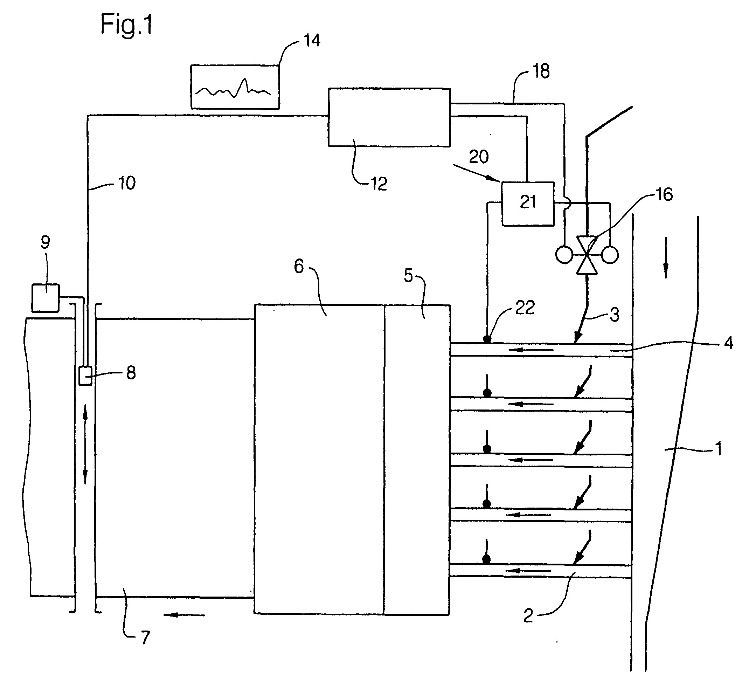

Figur 1: Das Prinzipbild eines erfindungsgemäßen Stoffauflaufs mit den dazugehörigen Regeleinrichtungen sowie dem Anfangsabschnitt einer Papierbahn.

Der in Figur 1 beispielhaft für stoffdichtegeregelte Stoffaufläufe dargestellte sektionale Stoffauflauf umfaßt eine zentrale Zufuhrleitung 1 für die Papierstoffsuspension. Die Zufuhrleitung teilt sich in eine Vielzahl von einzelnen Sektionen auf. In dem nachfolgend beschriebenen Ausführungsbeispiel sind die einzelnen Sektionen des Stoffauflaufes wenigstens abschnittsweise als einzelne Stoffzufuhrleitungen 2, ohne daß der erfindungsgemäße Gedanke hierauf eingeschränkt wäre, ausgebildet. Die über die gemeinsamen Zuführungen eingebrachte Papierstoffsuspension wird auf die einzelnen Stoffzufuhrleitungen 2 verteilt. An die einzelnen der Vielzahl von Stoffzufuhrleitungen ist jeweils mindestens eine Verdünnungsmittel-Zufuhrleitung 3 vorgesehen, über die Verdünnungsmittel, beispielsweise Verdünnungswasser oder aber auch verdünnte Papierstoffsuspension in die jeweilige Stoffzufuhrleitung 2 eingeleitet werden kann. Hierdurch kann die Papierstoffkonsistenz der Papierstoffsuspension in der jeweiligen Staffzufuhrleitung 2 hinter der Mischstelle 4 auf einen gewünschten Wert eingestellt werden, der dann selbsterständlich auch in der zugeordneten Sektion des Stoffauflaufes vorliegt. Über die einzelnen Stoffzufuhrleitungen 2 wird Rapierstoffsuspension in den sektionierten Turbulenzerzeuger 5 des Stoffauflaufes gebracht. Über eine Düse 6 wird der Papierstoff beispielsweise auf ein Formiersieb zur Bildung der Papierbahn 7 aufgebracht. In gewissem Abstand von der Stoffauflaufdüse 6 wird das Flächengewichtsquerprofil der Papierbahn mittels eines Sensors 8 gemessen, der quer zur eingezeichneten Laufrichtung der Papierbahn traversiert und beispielsweise durch einen Elektromotor 9 angetrieben sein kann. Die von dem Flächengewichtsquerprofilsensor 8 ermittelten Daten werden über eine Meßleitung 10 an einen Steuerrechner 12 übermittelt und das Flächengewichtsquerprofil, wie in der Abbildung mit der Bezugsziffer 14 dargestellt, dem Steuerrechner 12 errechnet. Ohne die erfindungsgemäße Konsistenzregelung ist - wie oben beschrieben - die Flächengewichtsquerprofilmessung aufgrund der Längsschwankungen im Flächengewicht stark verrauscht. Um dieses Rauschen zu unterdrücken kann in einer herkömmlichen Anordnung vorgesehen sein entsprechende Filter einzusetzen, wodurch aber Regeleingriffe der Querprofilregelung nur sehr seiten oder nicht mit ausreichend hoher Amplitude erfolgen.

Die erfindungsgemäße Regeleinrichtung umfaßt wie die Regler nach dem Stand der Technik gemäß der DE 42 39 845 eine Regelung des Flächengewichtsquerprofils, die mittels des Steuerungsrechners 12 durch Ansteuerung der jeweiligen, in einzelnen Verdünnungsmittel-Zufuhrleitungen 3 zugeordneten Stellgliedern 16 erfolgt, die vorzugsweise als Stellventile ausgebildet sind. Besonders bevorzugt ist der Einsatz von elektromechanischen Stellventilen, die über die Leitung 18 angesteuert werden können.

Erfindungsgemäß ist neben der Flächengewichtsquerprofilregelung beispielsweise gemäß der DE 42 39 845 jeder einzelnen Stoffzufuhrleitung 4 jedoch noch eine Papierkonsistenzregeleinrichtung 20 zugeordnet. Die Papierstoffkonsistenzregelung kann der Flächengewichtsquerprofilregelung in einer bevorzugten Ausführungsform nachgeordnet beziehungsweise unterlegt sein. Diese Papierstoffkonsistenzregelung umfaßt eine Steuereinrichtung 21 für jede Sektion beziehungsweise jede einzelne Stoffzufuhrleitung 3. An die Steuerungseinrichtung 21 ist ein Papierstoffkonsistenzsensor 22 angeschlossen. In der vorliegenden Ausführungsform des erfindungsgemäßen Stoffauflaufes ist in jeder der Stoffzufuhrleitungen 2 ein Papierstoffkonsistenzsensor 22 vorgesehen, der stromabwärts nach der Mischstelle 4 angeordnet ist. Selbstverständlich ist es auch möglich, den Papierstoffkonsistenzsensor an anderer Stelle innerhalb des Stoffauflaufes zu plazieren. Beispielsweise ist es in einer vereinfachten Ausführungform denkbar, den Papierstoffkonsistenzsensor anstatt in den einzelnen Stoffzufuhrleitungen 2 in der gemeinsamen Zufuhrleitung 1 anzuordnen. Das von diesem Sensor ermittelte Meßsignal wird dann zu den verschiedenen Steuereinrichtungen 21 der jeweiligen Stoffzufuhrleitungen 2 übermittelt und entsprechend diesem Signal die Stellglieder für die Zugabe von Verdünnungswasser in die jeweilige Stoffzufuhrleitung 2 angesteuert oder globale Veränderungen der Wassermenge. In der vorliegenden Ausführungsform ist darüber hinaus vorgesehen, daß als Stellglied für die Flächengewichtsquerprofilregelung wie auch für die Konsistenzregelung dasselbe Stellglied 16 verwendet wird und nur eine Verdünnungsmittel-Zufuhrleitung 3 je Stoffzufuhrleitung 2 vorgesehen ist. Selbstverständlich wäre es auch möglich zwei separate Verdünnungsmittel-Zufuhrleitungen mit zwei separaten, ansteuerbaren Ventilen, wovon das eine der Flächengewichtsquerprofilregelung und das andere der Konsistenzregelung dient, vorzusehen.

In einer weiteren Ausführungsform können die Konsistenzsensoren 22 auch im Rücklauf angeordnet sein. Der wesentliche Gedanke der Erfindung ist trotz der unterschiedlichen Anordnung der Konsistenzsensoren in den drei aufgezeigten Fällen erfüllt nämlich die erfindungsgemäße separate Regelung der Konsistenz in jeder der Stoffzufuhrleitungen 2 zum sektionalen Stoffauflauf. Als Papierstoffkonsistenzsensoren sind Sensoren denkbar, die anstelle eines Absolutwertes für die Papierstoffkonsistenz lediglich die Abweichung von einem zuvor angegebenen Wert ermitteln. Solche Sensoren sind beispielsweise Partikelzähler, bei denen Licht als Meßsignal verwendet wird. Mit Hilfe von Partikelzählern, die eine Fotodiode und eine Vorrichtung zur Erzeugung eines Laserstrahles umfassen, können Schwankungen in der Konsistenz sehr genau festgestellt werden. Anstelle der Partikelanzahl ist es auch möglich, lediglich die Anzahl der Helldunkel-Übergänge pro Sekunde an der Fotodiode als Maß für die Konsistenzschwankungen und damit die Regelung zu verwenden oder die "Flackerintensität" an der Fotodiode. Andere Meßprinzipien auf der Basis von Licht zur Ermittlung der Konsistenzschwankungen stellen beispielsweise die Lichtstreuung, oder die Lichtreflektion dar. Selbstverständlich ist es möglich, anstelle von Licht auch andere Meßsignale zu verwenden, die auf Konsistenzschwankungen der Papierstoffsuspension empfindlich sind. Ein Beispiel hierfür wäre die Verwendung von Mikrowellen, die in die Papierstoffsuspension eingebracht werden und deren Antwortfunktion aufgrund der durchströmenden Papierstoffsuspension für die Schwankungsregelung ausgewertet wird.

Mit dem vorliegenden erfindungsgemäßen Aufbau eines Stoffauflaufes können Konsistenzschwankungen in jeder einzelnen Stoffzufuhrleitung 2 zu den Sektionen des Stoffauflaufes, mit einer sehr hohen Grenzfrequenz ausgeregelt werden. Es ergibt sich dann ein Flächengewichtsquerprofilsignal am Sensor 8 das gegenüber den bisherigen Signalen wesentlich weniger stark verrauscht ist und somit einen schnelleren und exakteren Eingriff der Flächengewichtsquerprofilregelung erlaubt.

## Patentansprüche

1. Stoffdichtegeregelter Stoffauflauf für eine Papiermaschine mit
1.1 einer gemeinsamen Zufuhrleitung (1) für die Papierstoffsuspension
1.2 einer Vielzahl von Sektionen, in die die gemeinsame Zufuhrleitung (1) sich verzweigt, und
1.3 Mitteln zur Beeinflussung der Zusammensetzung der Stoffsuspensionsströme in den einzelnen der Vielzahl von Sektionen, **dadurch gekennzeichnet, daß**
1.4 mehrere Papierstoffkonsistenzsensoren (22) zur sektionalen Papierstoffkonsistenzregelung in der Vielzahl von Sektionen angeordnet sind.

2. Stoffauflauf gemäß Anspruch 1, **dadurch gekennzeichnet, daß** die Papierstoffkonsistenzsensoren (22) in jeder der Sektionen angeordnet ist.

3. Stoffauflauf gemäß Anspruch 1 oder 2, **dadurch gekennzeichnet, daß** mindestens einer der Papierstoffkonsistenzsensoren (22) im Rücklauf des Stoffverteilerrohres angeordnet ist.

4. Stoffauflauf gemäß einem der Ansprüche 1 bis 3 **dadurch gekennzeichnet, daß** mindestens einer der Papierstoffkonsistenzsensor (22) in der gemeinsamen Zufuhrleitung (1) angeordnet ist.

5. Stoffauflauf gemäß einem der Ansprüche 1 bis 4, **dadurch gekennzeichnet, daß** die Papierstoffkonsistenzregelung eine Schwankungsregelung ist.

6. Stoffauflauf gemäß einem der Ansprüche 1 bis 5, **dadurch gekennzeichnet, daß** mindestens einer der Papierstoffkonsistenzsensoren (22) als Meßsignal ein Lichtsignal verwendet.

7. Stoffauflauf gemäß Anspruch 6, **dadurch gekennzeichnet, daß** der Papierstoffkonsistenzsensor (22) einen Laser zur Lichterzeugung und eine Fotodiode zur Erfassung des Lichtsignals aufweist.

8. Stoffauflauf gemäß einem der Ansprüche 1 bis 5, **dadurch gekennzeichnet, daß** mindestens einer der Papierstoffkonsistenzsensoren (22) als Meßsignal ein Mikrowellensignal verwendet.

9. Stoffauflauf gemäß einem der Ansprüche 1 bis 8, **dadurch gekennzeichnet, daß** die Sektionen wenigstens in einem Abschnitt als separate Zufuhrleitungen (2) ausgeführt sind.

10. Regeleinrichtung für einen stoffdichtegeregelten Stoffauflauf einer Papiermaschine mit
10.1 mindestens einem außerhalb des Stoffauflaufes angeordneten Flächengewichtsquerprofilsensor (8), der das Flächengewichtsquerprofil der Papierbahn (7) erfaßt;
10.2 einer Steuerungseinrichtung (12) zur Regelung des Flächengewichtsquerprofiles;
10.3 Mitteln zur Beeinflussung der Zusammensetzung der Stoffsuspensionsströme in den einzelnen der Vielzahl von Sektionen, **dadurch gekennzeichnet, daß**
10.4 die Regeleinrichtung eine Papierstoffkonsistenz-Regeleinrichtung (20) umfaßt, die der Flächengewichtsquerprofilregelung unterlagert ist, die die Papierstoffkonsistenz in jeder der Vielzahl der Sektionen des Stoffauflaufes regelt.

11. Regeleinrichtung nach Anspruch 10, **dadurch gekennzeichnet, daß** der Sollwert für die Papierstoffkonsistenz-Regeleinrichtung (20) von der Steuerungseinrichtung (12) aufgrund des Flächengewichtsquerprofiles vorgegeben wird.

12. Regeleinrichtung gemäß einem der Ansprüche 10 oder 11, **dadurch gekennzeichnet, daß**
die Papierstoffkonsistenz-Regeleinrichtung (20) Papierstoffkonsistenzsensoren (22) umfaßt, die Differenzsignale bei Abweichung der Papierstoffkonsistenz von dem vorgegebenen Sollwert erzeugen.

13. Regelvorrichtung nach einem der Ansprüche 10 bis 12, **dadurch gekennzeichnet, daß** die Papierstoffkonsistenz-Regeleinrichtung (20) mit einer wesentlich höheren Abtastrate betrieben wird, als die Flächenquerprofilregelung.

14. Regelvorrichtung nach einem der Ansprüche 10 bis 13, **dadurch gekennzeichnet, daß** die einzelnen Sektionen des Stoffauflaufes wenigstens in einem Abschnitt als seperate Stoffzufuhrleitungen (2) ausgeführt sind.

15. Verfahren zur Regelung eines stoffdichtegeregelten Stoffauflaufes einer Papiermaschine umfassend folgende Schritte:
15.1 Ermittlung des Flächengewichtsquerprofils der Papierbahn (7) außerhalb des Stoffauflaufes mit einer Abtastrate ΔT;
15.2 Vergleich mit dem in einer Steuerungseinrichtung (12) abgelegten Sollprofil für das Flächengewichtsquerprofil;
15.3 bei Abweichung von Ist- und Sollwert Betätigung eines jeder Sektion des Stoffauflaufes zugeordneten Stellgliedes;
wobei das Verfahren durch folgende weitere Schritte **gekennzeichnet** ist:
15.4 Ermittlung der Papierstoffkonsistenz der Papierstoffsuspension an einer beliebigen Stelle im Stoffauflauf mit einer Abtastrate Δt;
15.5 Vergleich des Papierstoffkonsistenz-Istwertes mit einem Sollwert für die Papierstoffkonsistenz und
15.6 bei Abweichung Betätigung eines jeder Sektion des Stoffauflaufes zugeordneten Stellgliedes.

16. Verfahren zur Regelung eines stoffdichtegeregelten Stoffauflaufes einer Papiermaschine gemäß Anspruch 15, wobei bei der Ermittlung der Papierstoffkonsistenz nicht ein absoluter Wert, sondern lediglich die Abweichung von einem Sollwert gemessen wird und bei Vorliegen einer Abweichung ein jeder Sektion des Stoffauflaufes zugeordnetes Stellglied betätigt wird.

17. Verfahren gemäß einem der Ansprüche 15 oder 16, **dadurch gekennzeichnet, daß** der Sollwert für die Papierstoffkonsistenz aus dem im Schritt 14.1 ermittelten Flächengewichtsquerprofilwert ein Sollwert gebildet wird.

18. Verfahren nach einem der Ansprüche 15 bis 17, **dadurch gekennzeichnet, daß** die Abtastrate für die Ermittlung der Papierstoffkonsistenz beziehungsweise der Abweichung der Papierstoffkonsistenz von einem vorgegebenen Sollwert Δt sehr viel kleiner ist als die Abtastrate ΔT für das Flächengewichtsquerprofil.

## Claims

1. Controlled-consistency headbox for a papermaking machine, having
1.1 a common feed line (1) for the paper stock suspension
1.2 a multiplicity of sections, into which the common feed line (1) branches, and
1.3 means for influencing the composition of the stock suspension streams in the individual ones of the multiplicity of sections,
**characterized in that**
1.4 a plurality of paper stock consistency sensors (22) for sectional paper stock consistency control are arranged in the multiplicity of sections.

2. Headbox according to Claim 1, **characterized in that** the paper stock consistency sensors (22) are arranged in each of the sections.

3. Headbox according to Claim 1 or 2, **characterized in that** at least one of the paper stock consistency sensors (22) is arranged in the return from the stock manifold.

4. Headbox according to one of Claims 1 to 3, **characterized in that** at least one of the paper stock consistency sensors (22) is arranged in the common feed line (1).

5. Headbox according to one of Claims 1 to 4, **characterized in that** the paper stock consistency control constitutes control of fluctuations.

6. Headbox according to one of Claims 1 to 5, **characterized in that** at least one of the paper stock consistency sensors (22) uses an optical signal as a measuring signal.

7. Headbox according to Claim 6, **characterized in that** the paper stock consistency sensor (22) has a laser for producing light and a photodiode for registering the optical signal.

8. Headbox according to one of Claims 1 to 5, **characterized in that** at least one of the paper stock consistency sensors (22) uses a microwave signal as a measuring signal.

9. Headbox according to one of Claims 1 to 8, **characterized in that**, in at least one portion, the sections are designed as separate feed lines (2).

10. Closed-loop control device for a controlled-consistency headbox of a papermaking machine, having
10.1 at least one cross-machine direction grammage profile sensor (8) which is arranged outside the headbox and which registers the cross-machine direction grammage profile of the paper web (7);
10.2 a control device (12) for the closed-loop control of the cross-machine direction grammage profile;
10.3 means for influencing the composition of the stock suspension streams in the individual ones of the multiplicity of sections,
**characterized in that**
10.4 the closed-loop control device comprises a paper stock consistency control device (20) which is subordinate to the cross-machine direction grammage profile control and which controls the paper stock consistency in each of the multiplicity of sections of the headbox.

11. Closed-loop control device according to Claim 10, **characterized in that** the desired value for the paper stock consistency control device (20) is predefined by the control device (12) on the basis of the cross-machine direction grammage profile.

12. Closed-loop control device according to either of Claims 10 and 11, **characterized in that** the paper stock consistency control device (20) comprises paper stock consistency sensors (22) which produce differential signals when the paper stock consistency deviates from the predefined desired value.

13. Closed-loop control device according to one of Claims 10 to 12, **characterized in that** the paper stock consistency control device (20) is operated at a substantially higher sampling rate than the cross-machine direction grammage control.

14. Closed-loop control device according to one of Claims 10 to 13, **characterized in that**, in at least one portion, the individual sections of the headbox are designed as separate stock feed lines (2).

15. Method of controlling a controlled-consistency headbox of a papermaking machine, comprising the following steps:
15.1 determining the cross-machine direction grammage profile of the paper web (7) outside the headbox at a sampling rate ΔT;
15.2 comparing with a desired profile, stored in a control device (12), for the cross-machine direction grammage profile;
15.3 in the event of a deviation between actual value and desired value, actuation of an actuator associated with each section of the headbox;
the method being **characterized by** the following further steps:
15.4 determining the paper stock consistency of the paper stock suspension at an arbitrary point in the headbox at a sampling rate Δt;
15.5 comparing the paper stock consistency actual value with a desired value for the paper stock consistency, and
15.6 in the event of a deviation, actuating an actuator associated with each section of the headbox.

16. Method of controlling a controlled-consistency headbox of a papermaking machine according to Claim 15, an absolute value not being measured during the determination of the paper stock consistency but only the deviation from a desired value and, in the event of a deviation being present, an actuator assigned to each section of the headbox being actuated.

17. Method according to either of Claims 15 and 16, **characterized in that** the desired value for the paper stock consistency is formed from the cross-machine direction grammage profile value determined in step 14.1.

18. Method according to one of Claims 15 to 17, **characterized in that** the sampling rate for the determination of the paper stock consistency or the deviation of the paper stock consistency from a predefined desired value Δt is very much lower than the sampling rate ΔT for the cross-machine direction grammage profile.

## Revendications

1. Caisse de tête à régulation de consistance pour une machine à papier comprenant :
1.1 une conduite d'amenée commune (1) pour la suspension de pulpe de papier,
1.2 une pluralité de sections dans lesquelles la conduite d'amenée commune (1) se divise, et
1.3 des moyens pour influer sur la composition des courants de suspension de pulpe dans les sections individuelles de la pluralité de sections,
**caractérisée en ce que**
1.4 plusieurs capteurs de consistance de la pulpe de papier (22) pour la régulation de consistance de la pulpe de papier par sections sont disposés dans la pluralité de sections.

2. Caisse de tête selon la revendication 1, **caractérisée en ce que** les capteurs de consistance de pulpe de papier (22) sont disposés dans chacune des sections.

3. Caisse de tête selon la revendication 1 ou 2, **caractérisée en ce qu'**au moins l'un des capteurs de consistance de pulpe de papier (22) est disposé dans le retour du tube distributeur de pulpe.

4. Caisse de tête selon l'une quelconque des revendications 1 à 3, **caractérisée en ce qu'**au moins l'un des capteurs de consistance de pulpe de papier (22) est disposé dans la conduite d'amenée commune (1).

5. Caisse de tête selon l'une quelconque des revendications 1 à 4, **caractérisée en ce que** la régulation de la consistance de la pulpe de papier est une régulation de la fluctuation.

6. Caisse de tête selon l'une quelconque des revendications 1 à 5, **caractérisée en ce qu'**au moins l'un des capteurs de consistance de pulpe de papier (22) utilise comme signal de mesure un signal lumineux.

7. Caisse de tête selon la revendication 6, **caractérisée en ce que** le capteur de consistance de pulpe de papier (22) présente un laser pour produire de la lumière et une photodiode pour détecter le signal lumineux.

8. Caisse de tête selon l'une quelconque des revendications 1 à 5, **caractérisée en ce qu'**au moins l'un des capteurs de consistance de pulpe de papier (22) utilise comme signal de mesure un signal à micro-ondes.

9. Caisse de tête selon l'une quelconque des revendications 1 à 8, **caractérisée en ce que** les sections sont réalisées au moins dans une portion en tant que conduites d'amenée séparées (2).

10. Dispositif de régulation pour une caisse de tête à régulation de consistance pour une machine à papier comprenant :
10.1 au moins un capteur de profil transversal du grammage (8) disposé en dehors de la caisse de tête, qui détecte le profil transversal du grammage de la bande de papier (7) ;
10.2 un dispositif de commande (12) pour la régulation du profil transversal de grammage ;
10.3 des moyens pour influer sur la composition des courants de suspension de pulpe dans les sections individuelles de la pluralité de sections,
**caractérisé en ce que**
10.4 le dispositif de régulation comprend un dispositif de régulation de la consistance de la pulpe de papier (20) qui est soumis à la régulation du profil transversal du grammage, qui régule la consistance de la pulpe de papier dans chacune de la pluralité des sections de la caisse de tête.

11. Dispositif de régulation selon la revendication 10, **caractérisé en ce que** la valeur de consigne pour le dispositif de régulation de la consistance de la pulpe de papier (20) est prédéfinie par le dispositif de commande (12) sur la base du profil transversal du grammage.

12. Dispositif de régulation selon l'une quelconque des revendications 10 ou 11, **caractérisé en ce que** le dispositif de régulation de la consistance de la pulpe de papier (20) comprend des capteurs de consistance de la pulpe de papier (22), qui produisent des signaux de différence lors d'un écart de la consistance de la pulpe de papier par rapport à la valeur de consigne prédéfinie.

13. Dispositif de régulation selon l'une quelconque des revendications 10 à 12, **caractérisé en ce que** le dispositif de régulation de la consistance de la pulpe de papier (20) fonctionne avec une vitesse d'échantillonnage considérablement plus élevée que la régulation du profil transversal du grammage.

14. Dispositif de régulation selon l'une quelconque des revendications 10 à 13, **caractérisé en ce que** les sections individuelles de la caisse de tête sont réalisées au moins dans une portion en tant que conduites d'amenée de pulpe séparées (2).

15. Procédé de régulation d'une caisse de tête à régulation de consistance d'une machine à papier comprenant les étapes suivantes :
15.1 détermination du profil transversal du grammage de la bande de papier (7) en dehors de la caisse de tête avec une vitesse d'échantillonnage ΔT ;
15.2 comparaison avec le profil de consigne pour le profil transversal du grammage enregistré dans un dispositif de commande (12) ;
15.3 en cas d'écart entre la valeur réelle et la valeur de consigne, actionnement d'un organe de réglage associé à chaque section de la caisse de tête ;
le procédé étant **caractérisé par** les étapes supplémentaires suivantes :
15.4 détermination de la consistance de la pulpe de papier de la suspension de pulpe de papier au niveau d'un point quelconque dans la caisse de tête, avec une vitesse d'échantillonnage Δt ;
15.5 comparaison entre la valeur réelle de la consistance de la pulpe de papier avec une valeur de consigne pour la consistance de la pulpe de papier et
15.6 en cas d'écart, actionnement d'un organe de réglage associé à chaque section de la caisse de tête.

16. Procédé de régulation d'une caisse de tête à régulation de consistance d'une machine à papier selon la revendication 15, dans lequel, lors de la détermination de la consistance de la pulpe de papier, on mesure non pas une valeur absolue, mais seulement l'écart par rapport à une valeur de consigne, et en cas d'un écart, un organe de réglage associé à chaque section de la caisse de tête est actionné.

17. Procédé selon l'une quelconque des revendications 15 ou 16, **caractérisé en ce que** la valeur de consigne pour la consistance de la pulpe de papier est obtenue à partir de la valeur du profil transversal du grammage déterminée dans l'étape 14.1.

18. Procédé selon l'une quelconque des revendications 15 à 17, **caractérisé en ce que** la vitesse d'échantillonnage pour la détermination de la consistance de la pulpe de papier, respectivement de l'écart de la consistance de la pulpe de papier par rapport à une valeur de consigne prédéfinie Δt est beaucoup plus petite que la vitesse d'échantillonnage ΔT pour le profil transversal du grammage.
